Europäisches Patentamt

European Patent Office

Office européen des brevets

(11) Veröffentlichungsnummer: **0 335 161**
**A2**

## (12) EUROPÄISCHE PATENTANMELDUNG

(21) Anmeldenummer: 89104445.5

(22) Anmeldetag: 14.03.89

(51) Int. Cl.⁴: **G05B 19/04**

(30) Priorität: 30.03.88 DE 3810744

(43) Veröffentlichungstag der Anmeldung:
04.10.89 Patentblatt 89/40

(84) Benannte Vertragsstaaten:
**DE FR GB SE**

(71) Anmelder: **Drägerwerk Aktiengesellschaft**
**Moislinger Allee 53-55**
**D-2400 Lübeck 1(DE)**

(72) Erfinder: **Hoeck, Peter, Dr.**
**Mariental 16**
**D-2406 Stockelsdorf(DE)**
Erfinder: **Schmitt, Axel**
**Fierthstrasse 3**
**D-2409 Gleschendorf(DE)**

(54) **Digitaler Impulsgeber mit einer von der Einstellgeschwindigkeit abhängigen Einstelldynamik.**

(57) Ein digitaler Impulsgeber für die Einstellung von Stellgrößen, bei dem mittels eines Weg-Impuls-Wandlers die Einstellbewegung einer Betätigungsvorrichtung in eine digitale elektrische Impulsreihe wandelbar ist, soll derart verbessert werden, daß die Einstellung von Stellgrößen in einem hohen Dynamikbereich bei der Dynamik angepaßten Auflösung mit nur einem Betätigungselement ermöglicht wird. Dazu ist vorgesehen, daß dem Impulswandler (1) sowohl eine Zählereinheit (3) als auch eine Frequenzmeßeinheit (4) parallel zueinander nachgeschaltet sind, und daß das Frequenzsignal der Frequenzmeßeinheit (4) einer Bewertungseinheit (7) zuführbar ist, in welcher die Frequenzwerte entsprechend einer in der Bewertungseinheit (7) gespeicherten Kennlinie mit einem Wichtungsfaktor versehbar und sowohl die gewichteten Werte der Bewertungseinheit (7) als auch die Zählimpulse der Zählereinheit (3) an eine nachfolgende Wandler- und Anzeigeeinheit (8) zur Abgabe einer der gewichteten Frequenz und der Impulsanzahl entsprechenden Stellgröße an eine Stelleinheit (11) zuführbar sind. (Abb.)

EP 0 335 161 A2

## Digitaler Impulsgeber mit einer von der Einstellgeschwindigkeit abhängigen Einstelldynamik

Die Erfindung betrifft einen digitalen Impulsgeber für die Einstellung von Stellgrößen, bei dem mittels eines Weg-Impuls-Wandlers die Einstellbewegung einer Betätigungsvorrichtung in eine digitale elektrische Impulsreihe wandelbar ist.

Derartige Impulsgeber werden zur schnellen und einfachen Einstellung digitaler Werte eingesetzt. Um einen großen Einstellbereich mit einer hohen Auflösung überstreichen zu können, kann die Einstellung impulsweise erfolgen, so daß die Stellgröße in Schritten von einem Digit veränderbar ist. Will man den Einstellbereich in größeren Schritten schnell durchfahren, muß der Impulsgeber entsprechend lange betätigt werden, oder die Schnellverstellung wird durch eine rotierende Schwungscheibe an der Betätigungsvorrichtung unterstützt, so daß man sich vom augenblicklichen Sollwert rasch an den neuen einzustellenden Sollwert nähert. Dabei ist jedoch darauf zu achten, daß der neue einzustellende Sollwert nicht überschritten wird, indem das Schwungrad beispielsweise rechtzeitig angehalten und die restlichen kleineren Einstellungen von Hand in kleinen Einzelschritten nachgeführt werden.

Ein solcher Bit-Generator wird von der Firma ITT (Standard Elektrik Lorenz, Nürnberg, DE) unter der Bezeichnung BG 40 angeboten.

Andere bekannte Möglichkeiten, den Einstellbereich in unterschiedliche Einstellschritte je nach Erfordernis des Auflösungsvermögens zu unterteilen, besteht darin, den Einstellbereich durch Umschaltung in mehrere Empfindlichkeitsstufen aufzuteilen.

Will daher der Benutzer der bekannten Impulsgeber größere Spannen bzw. die gesamte Spanne des Einstellbereiches überstreichen, so muß er dies entweder bei gleichbleibendem Auflösungsvermögen durch mehr oder weniger langes Betätigen des Impulsgebers durchführen, oder er muß sich zuvor entscheiden, welcher Empfindlichkeitsbereich für seine Zwecke der geeignete ist, diesen entsprechend vorwählen und dann erst den Impulsgeber betätigen. Beide Lösungen erfordern zuviel Aufmerksamkeit für den Benutzer, insbesondere, wenn es darum geht, Stellgrößen an einer Stelleinheit zu verändern, welche lebenserhaltende Funktionen steuern, wie es z. B. in der Medizintechnik der Fall ist. Aber auch in Arbeitssituationen, in denen höchste Aufmerksamkeit abverlangt wird, ist es hinderlich, wenn einfache Einstellarbeiten zusätzliche Aufmerksamkeit erfordern.

Der Erfindung liegt somit die Aufgabe zugrunde, einen Impulsgeber der genannten Art so zu verbessern, daß die Einstellung von Stellgrößen in einem hohen Dynamikbereich bei der Dynamik angepaßten Auflösung mit nur einem Betätigungselement durchgeführt werden kann. Dabei soll es möglich sein, den Empfindlichkeitsbereich des Impulsgebers auch während seiner Betätigung frei nach den Wünschen des Anwenders verändern zu können.

Zur Lösung der Aufgabe ist vorgesehen, dem Impulswandler parallel zu der Zählereinheit eine Frequenzmeßeinheit nachzuschalten, deren Frequenzsignal einer Bewertungseinheit zuführbar ist. In dieser Bewertungseinheit werden die Frequenzwerte entsprechend einer in ihr gespeicherten Kennlinie mit einem Wichtungsfaktor versehen. Diese gewichteten Werte sowie die Zählimpulse der Zählereinheit werden einer Wandler- und Anzeigeeinheit zugeführt, in der sie zu einer Stellgröße verarbeitet werden, die an eine Stelleinheit zuführbar ist.

Durch diese Maßnahmen wird erreicht, daß durch die Betätigung des Impulsgebers zwei Größen abgeleitet werden, nämlich die Anzahl der abgegebenen Impulse sowie die Pulsfrequenz oder auch das Taktverhältnis bzw. die Pulspausenlänge. Somit stehen zwei voneinander abhängige Parameter zur Verfügung, mit deren Hilfe sowohl die Stellgröße als Sollwert wie auch der Empfindlichkeitsbereich für die gewünschte Einstelldynamik vom Anwender bestimmbar sind. Das bedeutet, daß bei langsamer Verstellung des Impulsgebers ein enger Bereich in kleinen Einstellschritten durchlaufen werden kann (hohes Auflösungsvermögen, geringe Einstelldynamik), oder durch schnelle Betätigung des Impulsgebers ein großer Bereich in großen Einstellschritten durchlaufen werden kann (geringes Auflösungsvermögen, hohe Einstelldynamik). Zwischen diesen beiden Extremen kann der Anwender sogar stufenlos während der Betätigung des Impulsgebers frei wählen. Er kann z. B. anfangs die Stellgröße in großen Einzelschritten schnell grob vorwählen und bei Annäherung an den Sollwert durch langsames Verdrehen in hoch aufgelösten Einzelschritten den Sollwert entsprechend seinen Erfordernissen genau einstellen. Dabei ist es nicht erforderlich, z. B. bei einer Einstellung durch einen Drehknopf mehrere Umdrehungen zu machen, sondern der Anwender kann auch durch eine genügend schnelle Viertel- bzw. Halbumdrehung oder auch eine andere Teilumdrehung des Betätigungselementes den gewünschten Einstellbereich erreichen. Die Einstellerfordernisse werden dabei im wesentlichen durch die in der Bewertungseinheit gespeicherte Kennlinie festgelegt. Für den Fall, daß diese Kennlinie linear ist, kann z. B. festgesetzt sein, daß 60 Impulse pro Sekunde mit dem Faktor 1 bewertet werden, so daß bei einer Umdrehung 60 Digits an die nachfolgende Wandler- und Anzeigeeinheit bzw. Stelleinheit abgegeben werden. Werden 600 Impulse pro Sekunde abgegeben, werden diese mit einem Faktor 100 gewichtet, so daß bei dieser Einstellgeschwindigkeit 6000 Digits an die Zähler bzw. Anzeigeeinheit abgegeben werden. Betätigt der Benutzer nun den Impulsgeber so schnell, daß eine Impulsfolge von 60 Impulsen pro Sekunde erreicht wird, aber nur 30 Impulse insgesamt erzeugt werden, werden entsprechend nur 30 Digits an die Zähler- bzw. Anzeigeeinheit abgegeben. Würde er andererseits die Impulsgabe mit einer Geschwindigkeit von 600 Impulsen pro Sekunde bei unveränderter Zahl der tatsächlich ausgelösten Impulse erreichen, würde eine Anzahl von 3000 Digits an die Zähler- bzw. Anzeigeeinheit abgegeben. Hat z. B. eine Flüssigkeits-Dosiervorrichtung einen Verstellbereich von 0,1 bis 100 ml/h und der Impulswandler gibt 30 Digits pro Umdrehung ab, so kann die Kennlinie vorsehen, daß bei einer Drehgeschwindigkeit von 0,1 Umdrehungen pro Sekunde der Wichtungsfaktor 1, bei einer Drehgeschwindigkeit von 3 Umdrehungen pro Sekunde der Wichtungsfaktor 33,3 beträgt. Ein Digit bedeutet danach bei Feineinstellung 0,1 ml/h, bei Grobverstellung 3,33 ml/h, oder anders gesagt beträgt die Empfindlichkeit pro Umdrehung bei Feineinstellung 3 ml/h und bei Grobverstellung 100 ml/h. Die Geschwindigkeit der Impulsabgabe kann während der Betätigung des Impulsgebers verändert werden, so daß kontinuierlich entsprechend der Kennlinie die Faktoren und damit auch die gezählten bzw. angezeigten Digits verändert werden. Somit legt die Geschwindigkeit der Einstellung fest, welchen Wichtungsbereich entsprechend der Kennlinie der Anwender zur Zeit benutzt. Die Anzahl der Impulse gibt an, welcher Bruchteil des maximalen Einstellbereiches gemäß der Wichtung der Kennlinie angezeigt werden soll. Der Anwender braucht nun nicht mehr zum Überstreichen des gesamten Dynamikbereichs den Einsteller mehrfach zu drehen, sondern kann dies auch durch ein kurzes, jedoch schnelles Betätigen des Einstellers erreichen.

Durch die Wahl der Art der Kennlinie, z. B. logarithmische, exponentielle oder Wurzelkennlinie, kann der Dynamikbereich entsprechend den Anforderungen an die Stelleinheit angepaßt werden. Es können auch mehrere lineare Kennlinien unterschiedlicher Steigung miteinander kombiniert werden, so daß die linearen Einstellbereiche in ihrer Wichtung mehrfach unterteilt werden können.

Um bei einer Vorwärts- und Rückwärtsdrehung die Drehrichtung unterscheiden zu können, ist an die Betätigungsvorrichtung ein zweiter Weg-Impuls-Wandler angeschlossen, wobei die Impulse beider Wandler an eine Phasenlageerkennungsschaltung angeschlossen sind. Somit können die Vorteile der frei wählbaren Einstelldynamik in beiden Drehrichtungen ausgenutzt werden.

Es ist zweckmäßig, die Stelleinheit mit einer Rückkopplungsleitung und einer Bewertungseinheit an die Wandler- und Anzeigeeinheit anzuschließen. Auf diese Weise wird der Wandler- und Anzeigeeinheit ein weiteres Bewertungssignal zugeführt, in dem sich der Betrag des Istwertes ausdrückt. Über die vorgegebene Bewertungskennlinie können dabei z. B. das Mittelfeld und die Endbereiche des gesamten möglichen Verstellbereiches unterschiedlich gewichtet sein. Die Verknüpfung innerhalb der Wandler- und Anzeigeeinheit führt dann dazu, daß den verschiedenen Empfindlichkeiten, die vom Benutzer absichtlich durch die Betätigungsgeschwindigkeit des Einstellers hervorgerufen werden, automatisch eine weitere Empfindlichkeitsänderung abhängig vom herrschenden Istwert überlagert wird. Dadurch ergibt sich dann z. B. im Mittelfeld des Verstellbereiches eine grundsätzlich höhere Empfindlichkeit als in den Endbereichen, oder umgekehrt.

Zusätzlich zur Ermittlung der Frequenz kann durch Differenzierung der Impulsfolge die Beschleunigung der Einstellung als Kriterium genommen werden, welches nach erfolgter Wichtung in der Bewertungseinheit den Dynamikbereich während der Einstellung festlegt. Zu diesem Zweck ist zwischen der Frequenzmeßeinheit und der Bewertungseinheit ein Differenzierer zwischengeschaltet.

Es ist besonders vorteilhaft, den Impulsgeber mit einem Schalter zu koppeln, der vom Benutzer nach erfolgter Einstellung betätigt werden muß, damit die eingestellten Sollwerte erst danach an die Stelleinheit weitergegeben werden. Dadurch ist möglich, daß der Anwender den gewünschten Sollwert zunächst einmal einstellt und an der Anzeigeeinheit kontrolliert und durch Betätigung des Schalters quittiert, wonach erst dann die Stelleinheit auf den neuen Sollwert wechselt. Dazu werden die Signale der Wandler- und Anzeigeeinheit zusammen mit dem Freigabesignal des Schalters auf ein UND-Gate zusammengeführt.

Ein Ausführungsbeispiel der Erfindung wird anhand der schematischen Zeichnung dargestellt und im folgenden näher erläutert.

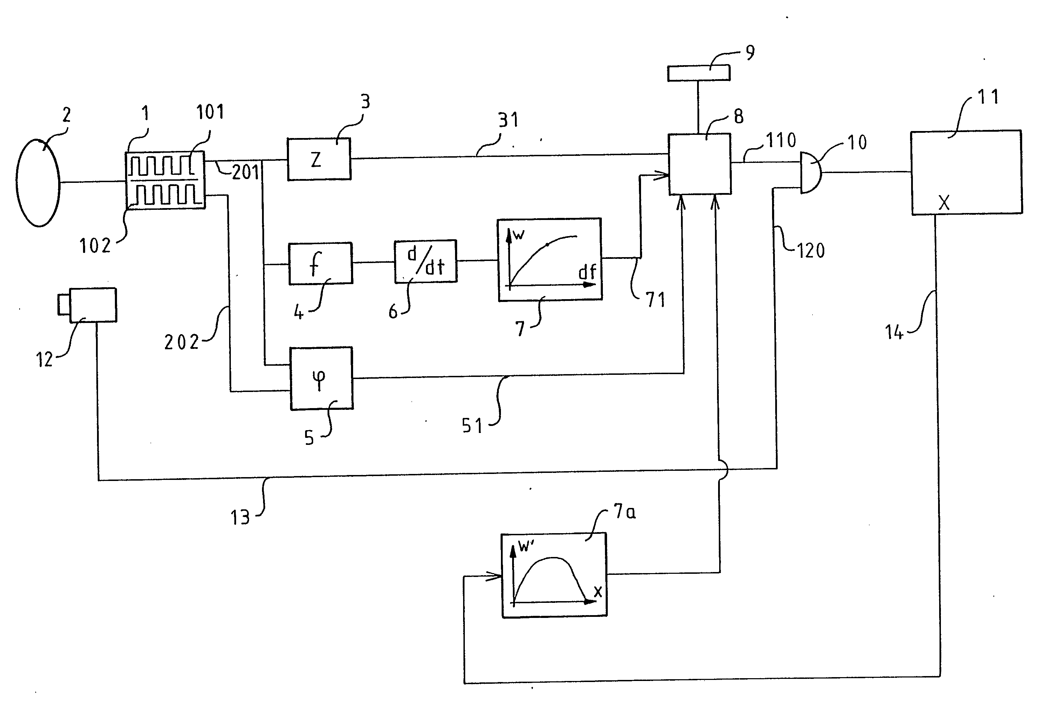

In der einzigen Figur ist ein digitaler Impulsgeber (1) dargestellt, welcher durch Betätigung einer als Handrad ausgebildeten Betätigungsvorrichtung (2) eine Serie von zueinander phasenverschobenen Impulsfolgen (101, 102) erzeugt. Die Impulsfolge (101) wird über eine Zählereinheit (3) erfaßt und gleichzeitig sowohl an eine Frequenz-Meßeinheit (4) und eine Phasenlageerkennungsschaltung (5) geführt. Die Impulsfolge (102) wird ebenfalls zu der Phasenlageerkennungsschaltung (5) geleitet, in welcher die Phasenverschiebung zwischen den Impulsfolgen (101 und 102) festgestellt wird. Die in der Frequenzmeßeinheit (4) aus der Impulsfolge (101) berechnete Frequenz f wird anschließend in einem Differenzierer (6) bezüglich der Impulsfolgezeit differenziert und einer Bewertungseinheit (7) zugeführt. Dort wird die differenzierte Pulsfrequenz df entsprechend einer eingegebenen Kennlinie mit einem Wichtungsfaktor W versehen. Die Zählerleitung (31) von der Zählereinheit (3), die Phasenleitung (51) von der Phasenlageerkennungsschaltung (5) sowie die Wichtungsleitung (71) auf der Bewertungseinheit (7) sind an eine Wandler- und Anzeigeeinheit (8) angeschlossen. In der Wandler- und Anzeigeeinheit (8) werden die gezählten Impulse mit dem gewichteten Frequenzsignal verknüpft, beispielsweise durch eine Multiplikation, und als Veränderung dem jeweils in der Einheit (8) vorliegenden Wert hinzugefügt (Phasensignal aus der Phasenleitung (51) positiv) oder von ihm abgezogen (Phasensignal aus der Phasenleitung (51) negativ). Eine Anzeige (9) macht den eingestellten neuen Sollwert sichtbar. Das Signal der Einheit (8) wird einem UND-Gate (10) zugeführt, dessen Ausgang erst dann an eine nachfolgende Stelleinheit (11) weitergegeben wird, wenn der Kontakt einer Quittiertaste (12) geschlossen und ein Quittiersignal über die Quittierleitung (13) an dem zweiten Eingang des UND-Gates anliegt. Eine Rückkopplungsleitung (14) verbindet die Stelleinheit (11) mit der Bewertungseinheit (7). Der von der Stelleinheit (11) entsprechend dem vorgegebenen Sollwert eingestellte Istwert wird über die Rückkopplungsleitung (14) einer weiteren Bewertungseinheit (7a) zugeführt. In dieser wird das Istwert-Signal X entsprechend einer eingegebenen Kennlinie mit einem Wichtungsfaktor W' versehen und der Wandler- und Anzeigeeinheit (8) zugeleitet, wo es mit den übrigen Signalen verknüpft wird. Durch den dargestellten Verlauf des Wichtungsfaktors kann auf diese Weise eine unterschiedliche Auflösung in Abhängigkeit vom Betrag des Istwertes, im Beispiel eine hohe Auflösung in den Endbereichen und eine geringe im Mittelfeld, erreicht werden.

## Ansprüche

1. Digitaler Impulsgeber für die Einstellung von Stellgrößen, bei dem mittels eines Weg-Impuls-Wandlers die Einstellbewegung einer Betätigungsvorrichtung in eine digitale elektrische Impulsreihe wandelbar ist, dadurch gekennzeichnet, daß dem Impulswandler (1) sowohl eine Zählereinheit (3) als auch eine Frequenzmeßeinheit (4) parallel zueinander nachgeschaltet sind, und daß das Frequenzsignal der Frequenzmeßeinheit (4) einer Bewertungseinheit (7) zuführbar ist, in welcher die Frequenzwerte entsprechend einer in der Bewertungseinheit (7) gespeicherten Kennlinie mit einem Wichtungsfaktor versehbar und sowohl die gewichteten Werte der Bewertungseinheit (7) als auch die Zählimpulse der Zählereinheit (3) an eine nachfolgende Wandler- und Anzeigeeinheit (8) zur Abgabe einer der gewichteten Frequenz und der Impulsanzahl entsprechenden Stellgröße an eine Stelleinheit (11) zuführbar sind.

2. Digitaler Impulsgeber nach Anspruch 1, dadurch gekennzeichnet, daß an die Betätigungsvorrichtung (2) ein zweiter Weg-Impuls-Wandler (102) zur Abgabe einer weiteren, gegenüber der ersten Impulsreihe phasenverschobenen digitalen Impulsreihe angeschlossen ist, und daß die Impulsleitungen (201, 202) beider Wandler (101, 102) mit einer Phasenlageerkennungsschaltung (5) verbunden sind.

3. Digitaler Impulsgeber nach Anspruch 1 oder 2, dadurch gekennzeichnet, daß die Stelleinheit (11) über eine Rückkopplungsleitung (14) und eine Bewertungseinheit (7a) mit der Wandler- und Anzeigeeinheit (8) verbunden ist.

4. Digitaler Impulsgeber nach einem der Ansprüche 1 bis 3, dadurch gekennzeichnet, daß der Frequenzmeßeinheit (4) ein Differenzierer (6) nachgeschaltet ist.

5. Digitaler Impulsgeber nach einem der Ansprüche 1 bis 4, dadurch gekennzeichnet, daß die Betätigungsvorrichtung (2) mit einem Quittiersignalgeber (12) kombiniert ist, der an den anderen Eingang (110) eines zwischen der Wandler- und Anzeigeeinheit (8) und der Stelleinheit (11) geschalteten UND-Gates (10), angeschlossen ist.

EP 0 335 161 A2